# EUROPÄISCHE PATENTSCHRIFT

(11) **EP 1 127 685 B1**
(45) Veröffentlichungstag und Bekanntmachung des Hinweises auf die Patenterteilung: **06.12.2006**
(21) Anmeldenummer: 01102138.3
(22) Anmeldetag: 01.02.2001
(51) Int. Cl.: B32B 27/08, B32B 27/40, B32B 7/02, B60R 13/00, B60R 13/02, C08G 18/22

(54) **Druck- und vakuumverformbare, genarbte Verbundfolie, Verfahren zu deren Herstellung und ihre Verwendung**
Pressure- and vacuum-deformable grained composite sheet, process for making it and its use
Feuille composite déformable par compression et par le vide, procédé pour sa fabrication et son utilisation

(30) Priorität: 21.02.2000 DE 10007884
(43) Veröffentlichungstag der Anmeldung: 29.08.2001
(73) Patentinhaber: Benecke-Kaliko AG, 30007 Hannover (DE)
(72) Erfinder: Breuksch, Ulrich, Dr., 29690 Lindwedel (DE); Kruse, Hans-Hinrich, Dr., 30890 Barsinghausen (DE); Zürbig, Claus, Dr., 30163 Hannover (DE)
(74) Vertreter: Finger, Karsten

(56) Entgegenhaltungen:
- DE-A- 3 938 629
- DE-A- 4 315 663
- GB-A- 2 109 803
- US-A- 4 552 944
- US-A- 5 316 822

## Beschreibung

Die Erfindung betrifft eine druck- und vakuumverformbare, genarbte Verbundfolie für Verkleidungen von Fahrzeuginnenräumen mit mindestens einer Trägerschicht, einer ein- oder mehrlagigen Schicht aus einem vernetzten, elastischen Polyurethan sowie gegebenenfalls einer dazwischen angeordneten Haftvermittlerschicht, einer Primerschicht sowie weiteren üblichen Schichten.

Verbundfolien sind Kombinationen von Werkstoffen, die aus verschiedenen Materialien aufgebaut sind und in ihren physikalisch-chemischen und mechanischen Eigenschaften den einzelnen Werkstoffen überlegen sind. Der allgemeine Aufbau ergibt sich aus einem Trägermaterial, welches beispielsweise die Festigkeit und Dehnbarkeit bestimmt, und einer Oberflächen- oder Deckschicht, die unter anderem für die Abrieb- und Stoßfestigkeit verantwortlich ist.

Man unterscheidet hierbei ein- und zweikomponentige Beschichtungssysteme, wobei die einkomponentigen Beschichtungen als Lösung oder Dispersion für dünne Filme geeignet sind und zweikomponentige Systeme in Form sogenannter "High-Solids-Systeme" eingesetzt werden können, bei denen während des Polymerisierens das Molekulargewicht des Polymers mit einem Kettenverlängerer sukzessive aufgebaut wird. Es handelt sich hierbei um festkörperreiche, lösemittelarme Zusammensetzungen, die aus Gründen günstiger umweltfreundlicher Anwendung in steigendem Umfange verwendet werden.

Verbundfolien mit ein- oder zweikomponentigen Systemen sind im Stand der Technik seit langem bekannt. So beschreibt die US 5 149 589 eine auf einem starren, synthetischen Harzmaterial aufgeschmolzene thermoplastische Elastomerzusammensetzung, die ein thermoplastisches Elastomer aus hydriertem SBS-Blockcopolymer, Olefin-, Dien- oder Urethanelastomer und ein thermoplastisches Polyester-Elastomer umfasst.

Die FR 2 445 223 bezieht sich auf ein Zweischichtsystem, in dem die Schicht A ein Polyolefin, ein Polyamid, einen gesättigten Polyester, ein Polyacrylat, einen Polyether, ein Polycarbonat, ein Polyurethan, ein Polyacrylnitril, ein Polyvinylchlorid, ein thermohärtbares Harz, vulkanisierten Kautschuk, Glas oder Papier darstellt und Schicht B aus mit ungesättigten Carbonsäuren oder deren Derivaten gepfropftem Styrol-Butadien-Copolymer gebildet ist.

Aus der DE 40 22 741 A1 sind mehrschichtige Polyurethanfolien bekannt, wobei mindestens zwei Schichten der Verbundfolie aus thermoplastischen Polyurethanen mit unterschiedlicher Shore-Härte bestehen. Eine der Schichten besitzt dabei vorzugsweise eine Shore-A-Härte von 60 bis 98 und eine weitere Schicht eine Shore-D-Härte von 50 bis 74.

In den Patentschriften DE 39 38 629 C2 sowie EP 0 429 020 B1 wird eine druck- und vakuumverformbare, genarbte Schaumfolie beschrieben, wobei die Dekorschicht aus einer inneren und einer äußeren Polyurethan-Schicht besteht, und die Schaumschicht aus geschäumtem Polyolefin einer bestimmten Dichte, Bruchdehnung, Stauchhärte und Stärke aufgebaut ist. Diese Folie, die für Verkleidungen von Fahrzeuginnenräumen eingesetzt werden kann, konnte sich jedoch am Markt nicht durchsetzen. Sie besitzt ähnlich wie die oben beschriebenen Folien keine zufriedenstellenden Eigenschaften. Die zur Verfügung gestellte Schaumfolie ist aufgrund der eingesetzten Materialien - Polyurethan und Polyolefin - sehr kostspielig und daher unrentabel. Bestimmte Eigenschaften, wie ein erwünschter Haptik-Effekt, werden durch die Folie nicht erreicht. Auch kann die Darstellung enger Radien, wie dies beispielsweise bei Designs in der Automobilindustrie erforderlich ist, nicht realisiert werden. Zudem verfügt die Folie nicht über eine ausreichende Festigkeit und Formbeständigkeit, um mit den gängigen Verfahren aus dem Stand der Technik verarbeitbar zu sein. Ein Tiefziehen und nachgeschaltetes Hinterschäumen ist nicht möglich.

Ferner beschreibt die EP 0 567 883 B1 Verbundformkörper aus mindestens einer Schicht aus einem ABS-Kunststoff und mindestens einer Schicht aus einem thermoplastischen Polyurethan mit einer Shore-D-Härte von > 50, wobei zwischen der ABS-Schicht und der thermoplastischen Polyurethan-Schicht eine Haftvermittlerschicht vorhanden sein kann. Vorzugsweise besteht die Haftvermittlerschicht selbst aus dem genannten thermischen Polyurethan. Die Verbundfolie wird zur Herstellung von Kühlschrankinnenbehältern eingesetzt, wobei die Beständigkeit gegenüber Chemikalien, wie fluorierten Kohlenwasserstoffen, im Vordergrund steht. Diese vorgeschlagenen Verbundformkörper sind insofern nachteilig, da sie aus haptischen Gründen nicht für den angestrebten Einsatz nach der Erfindung geeignet sind. Ferner ist nur eine geringe Variabilität der einsetzbaren Materialien bei den Verbundformkörpern aus thermoplastischem Polyurethan und ABS-Kunststoffen möglich.

Der Erfindung liegt die Aufgabe zugrunde, die eingangs beschriebenen Verbundfolien derart weiterzubilden, dass unter Beibehaltung vorteilhafter Eigenschaften und in Einzelfällen unter Verbesserung von Eigenschaften die Auswahl der Ausgangsmaterialien flexibel gestaltet werden kann. Insbesondere soll sie die oben beschriebenen Nachteile der aus der DE 39 38 629 C2 bekannten Verbundfolie, die als Träger eine spezielle Schaumschicht einbezieht, beheben. Insbesondere sollen auch enge Radien bei speziellen Designs im Fahrzeuginnenraum umsetzbar sein. Ferner soll ein Tiefziehen mit nachgeschaltetem Hinterschäumen problemlos möglich sein. Es sollen sich hervorragende physikalische/mechanische Eigenschaften einstellen, insbesondere eine hohe Abriebfestigkeit. Die Verbundfolie soll nicht nur tiefziehfähig sein, sondern auch über ausreichende Festigkeit und Formbeständigkeit verfügen, um mit den gängigen Standardverfahren aus dem Stand der Technik verarbeitbar zu sein.

Erfindungsgemäß wird diese Aufgabe dadurch gelöst, dass die Trägerschicht kompakt ist und eine Dicke von 0,4 bis 1,4 mm, eine Bruchdehnung (nach DIN EN ISO 527 Teil 39) von 100 bis 300 sowie eine Shore-D-Härte von mindestens 20 aufweist, die Schicht aus vernetztem, elastischem Polyurethan eine Shore-D-Härte von kleiner als 50, insbesondere kleiner als 48, aufweist.

Hierzu wird erfindungsgemäß eine kompakte Trägerschicht ausgewählt, die in bekannter Art und Weise in Standardverfahren und auf Standardmaschinen verarbeitbar ist und für die notwendige Verformungsfähigkeit und Beständigkeit der erfindungsgemäßen Folie sorgt. Sie hat eine Stützfunktion und gewährleistet die Tiefziehfähigkeit, insbesondere auch in Richtung der Darstellung dreidimensionaler Strukturen. Die im Rahmen der Erfindung verwendbaren Materialien der Trägerschicht sind nicht besonders beschränkt. Vorzugsweise ist sie aus mindestens einem Thermoplast aufgebaut. Die Materialklassen die hierfür insbesondere in Frage kommen sind beispielsweise Acrylnitril-Butadien-Styrol-Copolymerisate (ABS), Acrylnitril-Styrol-Acrylester-Copolymerisate (ASA), Polyvinylchlorid (PVC)/ABS-Blends, thermoplastische Olefine, die gegebenenfalls eine Hochfrequenzverschweißbarkeit der Folie erlauben, ABS/ASA-Blends, Polyester, wie Polyethylenterephthalate zum Beispiel mit entsprechender Härte bei Raumtemperatur, thermoplastische Polyurethane, die besondere Vorteile beim Hinterschäumen, beispielsweise mit Polyurethan-Reaktivschaum, zeigen sowie Mischungen derselben.

Die verformbare, vorzugsweise tiefziehfähige Trägerschicht weist eine Bruchdehnung (nach DIN EN ISO 527 Teil 39) von 100 bis 300 auf. Die erfindungsgemäß bereitgestellten Verbundfolien streben ferner eine Dimensionsstabilität nach dem Verformen und bei Raumtemperatur vorzugsweise kleiner als 2% an. Die Dicke der Trägerschicht beträgt 0,4 bis 1,4 mm und insbesondere 0,8 bis 1 mm. Die Shore-D-Härte der Trägerschicht liegt bei mindestens 20, insbesondere 30 bis 60 und beträgt besonders bevorzugt 35 bis 50.

Erfindungsgemäß sind für die Polyurethan-Schichten zahlreiche Kombinationen und Varianten möglich. Die ein- oder mehrlagigen Polyurethanschichten sind elastomer, wobei die Shore-D-Härte unterhalb 50 liegt.

Im Falle der einlagigen Ausführungsform werden bevorzugt aliphatische Diisocyanate mit einer Polyhydroxyverbindung umgesetzt. Bei der mehrlagigen Variante werden bevorzugt aliphatische Diisocyanate, insbesondere als Deck- oder Oberschicht, oder aromatische Diisocyanate mit einer Polyhydroxyverbindung zum gewünschten Polyurethan umgesetzt. Nach einer weiteren erfindungsgemäßen Variante kann das thermoplastische Polyurethan zu einer Folie geformt oder vorgeformt werden.

Wählt man für die Polyurethan-Schicht erfindungsgemäß ein vernetztes, elastisches Polyurethan aus, kann dies ebenfalls ein- oder mehrlagig vorliegen:

Im Falle der einlagigen Ausfiihrungsform wird bevorzugt aliphatisches Diisocyanat mit einer Polyhydroxyverbindung umgesetzt. Hierfür kann auch ein reaktives "High-Solids-System" herangezogen werden. Bei der mehrlagigen Variante werden bevorzugt aliphatische Diisocyanate, insbesondere als Deck- oder Oberschicht, oder aromatische Diisocyanate mit einer Polyhydroxyverbindung zum Polyurethan umgesetzt. Es können aus Lösung aufgebrachte Polyurethane in einer Schicht mit reaktiven "High-Solids-Systemen" in einer weiteren Schicht kombiniert werden. Auch die Kombination von einem reaktiven "High-Solids-System" in einer Schicht mit einem gleichen oder anderen reaktiven "High-Solids-System" in einer weiteren Schicht ist möglich. Wird ein Mehrschichtaufbau der vernetzten, elastischen Polyurethan-Schicht ausgewählt, wird gegebenenfalls eine zusätzliche geschäumte Unterschicht eingesetzt.

Bei sämtlichen oben beschriebenen Ausführungsformen zur Ausbildung einer ein- oder mehrlagigen vernetzten, elastischen Polyurethan-Schicht wird jede der angesprochenen Schichten vernetzt. Eine entsprechende Nachvernetzung der Schichten kann auch erfolgen.

Die oben beschriebenen Diisocyanate zur Herstellung der Polyurethane unterliegen keinerlei Beschränkung. Bevorzugt verwendete aliphatische Diisocyanate sind beispielsweise Hexamethylendiisocyanat, Isophorondiisocyanate, 1,4-Dicyclohexandiisocyanate sowie deren Gemische. Bevorzugt eingesetzte aromatische Diisocyanate sind 2,4-Toluylendiisocyanat, 2,2'-, 2,4'- und 4,4'-Diphenylmethandiisocyanate, 4,4'-Diisocyanatdiphenylethan-(1,2), 1,5-Naphthylendiisocyanat und deren Gemische.

Die Auswahl der eingesetzten Polyhydroxyverbindungen ist erfindungsgemäß ebenfalls nicht besonders beschränkt. Diese können sowohl aliphatisch als auch aromatisch sein. Bevorzugte Polyhydroxyverbindungen sind Polyetherpolyole, wie Polyetherdiole, Polytetrarnethylenetherdiole, Polyesterpolyole, wie Ethandiolpolyadipat, 1,4-Butandiolpolyadipat, Ethandiolbutandiol-1,4-polyadipat, 1,6-Hexandiolneopentylglykolpolyadipat, Polycaprolactone, hydroxygruppenhaltige Polymere, wie Polyacetale, Poly(oxypropylen)glykole, Glykole dimerer Fettsäuren und Gemische derselben.

Die Schicht aus vernetztem, elastischem Polyurethan kann auch aus einem löslichen Polyurethan hergestellt sein. Vorzugsweise wird zwischen der Trägerschicht und der Schicht aus löslichem Polyurethan eine weitere Schicht aus einem vernetzten Polyurethan anhand eines reaktiven High-Solids-Polyurethan(PUR)-Systems ausgebildet. Zur Ausbildung der vernetzten, elastischen Polyurethan-Schicht kann ein reaktives High-Solids-Polyurethan(PUR)-System unter Einsatz von etwa 100 Gew.-Teilen Polyetherpolyol, etwa 400 Gew.-Teilen Methylendiisocyanat und etwa 10 Gew.-Teilen Katalysator, insbesondere Nickelacetylacetonat (10%ig in Polyoxypropylenglykol), eingesetzt werden.

Eine erfindungsgemäße kompakte Polyurethan-Schicht in Form einer Deckschicht hat eine Stärke von 0,1 bis 2 mm, vorzugsweise 0,3 bis 0,7 mm und insbesondere 0,45 bis 0,55 mm. Eine optional vorhandene weitere Polyurethan-(Schaum-)Schicht weist beispielsweise eine Stärke von 0,2 bis 0,6 mm auf. Um Masse zu sparen, kann die Deckschicht aus Polyurethan, die als Dekorschicht ausgebildet sein kann, vergleichsweise dünn ausgelegt werden, und ist dann 0,02 bis 0,2 mm stark. Die Dekorschicht hat Einfluß auf Farbe, Glanzgrad sowie physikalische und chemische Beständigkeit. Das Gesamtgebilde wirkt sich dann auf die Haptik aus.

Die Darstellung von Oberflächenstrukturen auf der Deck- oder Dekorschicht kann in bekannter Weise erfolgen. So können dem Fachmann bekannte übliche Technologien mit beliebigen Narben eingesetzt werden. Auch LE-Narbe (Leder Echt) ist möglich. Die Narbe kann durch Gießen oder auch durch Prägen, beispielsweise nach einem Negativziehverfahren, ausgebildet werden. Ein mögliches Verfahren zur Herstellung von Kunststofffolien auf einem Band ist zum Beispiel in der DE 44 22 871 beschrieben.

In der Mehrzahl der technischen Anwendungsfälle ist es besonders zweckmäßig, eine Primerschicht zwischen Trägerschicht und Deckschicht auszubilden. Deren Ausbildung und chemische Merkmale hängen von dem jeweiligen verwendeten Substraten ab. Hierzu können eine oder mehrere Schichten aufgebracht werden, die einerseits Haftung zur Oberschicht und andererseits Haftung zum Trägermaterial gewährleisten. Dies ist insbesondere für die Weiterverarbeitung einer dehäsiv wirkenden Polyurethan-Schaumschicht zweckmäßig Auf der freiliegenden Oberfläche der Trägerschicht kann zudem ein Rückseitenhaftlack angebracht sein.

Die Deck- bzw. Dekorschicht und die Basisschicht lassen sich durch verschiedene bekannte Techniken miteinander verbinden. Hierzu können übliche Kleber, Kleberkaschierungen und klebende Folien, wie Schmelzklebefolien, eingesetzt werden. Dauerhaft flächig verbindende Kleberschichten mit geringer Stärke, welche die übrigen Schichten in ihren Eigenschaften und Charakteristika sowie die Verarbeitbarkeit des Fertigprodukts nicht beeinträchtigen, sind bevorzugt. Die ein- oder mehrlagige Kleberschicht ist bevorzugt nicht stärker als 0,2 mm. Ein- oder mehrlagige Haftklebeschichten in Form von Lösemittel- oder Dispersionsklebstoffen sind bevorzugt. Insbesondere werden Polyurethan-Klebstoffe, wie 2-K-PUR-Systeme, verwendet.

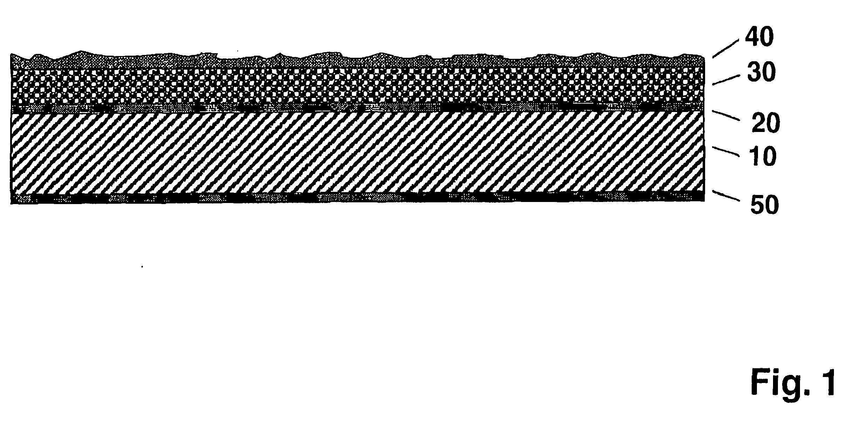

Die beigefügte Figur 1 veranschaulicht einen beispielhaften Aufbau einer erfindungsgemäßen druck- und vakuumverformbaren, genarbten tiefziehfähigen Verbundfolie. Danach setzt sich die Deck- oder Dekorschicht (**40**) aus einem vernetzten, elastischen Polyurethan und optional einer weiteren Polyurethan-Schaumschicht (**30**) zusammen. Auf diese folgt eine Kleberschicht (**20**), welche die Polyurethan-Schaumschicht (**30**) mit der Trägerschicht (**10**) flächig verbindet. Auf der von der Kleberschicht (**20**) abgewandten Seite der Trägerschicht (**10**) ist gegebenenfalls ein Rückseitenhaftlack (**50**) angeordnet.

Gegenstand der Erfindung ist ebenfalls ein Verfahren zur Herstellung einer erfindungsgemäßen Verbundfolie, wobei
a) eine oder mehrere Polyurethanschichten auf einen dehäsiv ausgerüsteten genarbten Hilfsträger, der das Negativ einer gewünschten Prägung aufweist, mittels eines Rakels in Form einer Lösung eines thermoplastischen Polyurethans aufgetragen, getrocknet und dann mit einem Rakel eine zur Bildung eines Polyurethans fähige Streichmasse der nachfolgenden Zusammensetzung aufgebracht wird, die
   I) ein Polyol HO-R¹-OH mit primären und/oder sekundären endständigen Hydroxyfunktionalitäten,
   II) ein Diisocyanat OCN-R²-NCO und/oder ein Diisocyanat-Präpolymer OCN-R²-NH-CO-O-R¹-O-CO-NH-R²-NCO, wobei R¹ und R² unabhängig voneinander für einen organischen Rest stehen, der aliphatische, cycloaliphatische, aromatische und/oder heterocyclische Gruppen umfasst, und
   III) einen Katalysator enthält,
b) die thermisch zu einem vernetzten Polyurethanelastomer ausgehärtet wird,
c) eine Haftvermittlerschicht ausgebildet und darauf eine kompakte Trägerschicht aufgebracht wird und
d) die Verbundfolie von dem dehäsiv ausgerüsteten Hilfsträger, der das Negativ der gewünschten Prägung aufweist, abgezogen wird.

Der Rest -O-R¹-O- weist bevorzugt ein Molekulargewicht von etwa 2000 bis 12000 auf, wobei vorzugsweise die oben beschriebenen Polyole eingesetzt werden. Vorzugsweise stehen die primären und sekundären Hydroxyfunktionalitäten des eingesetzten Polyols im Verhältnis von etwa 2 zu 1 bis 1 zu 6. Es können bifunktionelle und/oder trifunktionelle Polyole, beispielsweise im Verhältnis von etwa 1 zu 2 bis 5 zu 1 eingesetzt werden. Der Einsatz von unpolaren Polyesterpolyolen führt zu hydrolytisch und thermisch besonders stabilen Systemen.

Die einsetzbaren Diisocyanatverbindungen, auf die der Rest R² zurückgeht, unterliegen keinerlei Einschränkung. Beispielhaft wurden bereits einige Verbindungen genannt. Als bevorzugter Katalysator wird ein Metallacetylacetonat eingesetzt, wobei sich Nickelacetylacetonat als besonders geeignet erwiesen hat. Für die erfindungsgemäßen Belange wird vorteilhafterweise eine zur Bildung eines Polyurethans fähige reaktive Streichmasse der Zusammensetzung (A) eingesetzt, die beim Ausstreichvorgang eine Viskosität von etwa 1 Pa s bis etwa 20 Pa s aufweist. Für den Produktionsablauf ist es von Vorteil, wenn die Zusammensetzung (A) ein strukturviskoses Verhalten zeigt.

Für die Produktionsgeschwindigkeit ist die Verweilzeit bei der thermischen Aushärtung ein wesentlicher Faktor, der die Wirtschaftlichkeit beeinflußt. Bevorzugt wird daher der thermische Aushärtungsschritt über einen Zeitraum von etwa 0,1 bis 4 Minuten bei etwa 100 bis 180°C durchgeführt. Besonders bevorzugt wird der thermische Aushärtungsschritt über einen Zeitraum von etwa 90 bis 150 s bei etwa 140 bis 170°C, insbesondere bei einer Temperatur aufsteigend bis zu etwa 165°C durchgeführt.

Polyurethane sind aufgrund ihrer Eigenschaften nur in aufwendigen Verfahren zu prägen. Eine feinstrukturierte Narbe kann daher nur durch Umkehrbeschichtung auf negativ genarbten Trägern erzeugt werden. Nach der Erfindung wird daher ein dehäsiv ausgerüsteter Hilfsträger eingesetzt, der das Negativ einer gewünschten Prägung aufweist.

Die Erfindung bezieht sich auch auf die Verwendung der Verbundfolie zur Verkleidung von Fahrzeuginnenräumen, wobei zusätzlich ein Hinterschäumen mit einem Polyurethanschaum erfogen kann.

Mit der Erfindung sind eine Vielzahl von Vorteilen verbunden: Es wird erfindungsgemäß eine Verbundfolie zur Verfügung gestellt, welche die Anforderungen, insbesondere für Fahrzeuginnenverkleidungen, in hohem Maße erfüllt, was sich zum Beispiel in den guten Gebrauchseigenschaften widerspiegelt. So können auch enge Radien bei speziellen Designs im Fahrzeuginnenraum mit der Verbundfolie umgesetzt werden. Es werden gute mechanische Eigenschaften hinsichtlich Bruchdehnung, Narbstabilität und Kratzfestigkeit erzielt. Die erfindungsgemäße Verbundfolie weist die gewünschte weiche Haptik auf und ermöglicht einen weichen Oberflächengriff. Die Folie ist tiefziehfähig und verfügt über eine ausreichende Festigkeit und Formbeständigkeit, um mit den gängigen Standardverfahren auf Standardmaschinen aus dem Stand der Technik verarbeitbar zu sein. Beispielsweise kann eine Verbundfolie der Erfindung aus zwei Schichten hergestellt werden, wobei eine Schicht eine dünne Polyurethan-Deckfolie im Streichverfahren hergestellt und eine weitere Schicht in Form einer ABS-Folie im Kalandrierverfahren zur Verfügung gestellt wird. Ein Tiefziehen und nachgeschaltetes Hinterschäumen der erfindungsgemäßen Verbundfolie ist ebenfalls möglich. Ein weiterer Vorteil ist der kostengünstige Preis der eingesetzten Edukte gegenüber den im Stand der Technik beschriebenen teuren Ausgangsmaterialien. Beim erfindungsgemäßen Verfahren ermöglicht der Einsatz eines Katalysators ein Variieren der Reaktivität der eingesetzten Streichmassen, was zur flexiblen Gestaltung des Produktionsablaufs und weiteren Kostenersparnissen führt. Die einsetzbaren Materialien können variabel nach den speziellen Zielvorgaben ausgewählt und optimal angepaßt werden. Die erfindungsgemäßen Verbundfolien weisen insgesamt hervorragende physikalisch/mechanische Eigenschaften auf: So wurden eine hohe Abriebfestigkeit, eine hohe Lichtbeständigkeit eine ausgezeichnete Lösemittelbeständigkeit sowie eine sehr hohe thermische Alterungsbeständigkeit festgestellt.

Die Erfindung soll nachfolgend anhand von Beispielen näher veranschaulicht werden.

### Beispiel 1:

Es wird eine Dekorschicht, bestehend aus einer ersten und einer zweiten Schicht hergestellt. Die erste Schicht basiert auf einem gelösten Polyurethan, das in konventioneller Art und Weise hergestellt wird, und weist eine Dicke von 50 um auf. Diese Schicht ist für die physikalisch mechanischen Eigenschaften der hergestellten Verbundfolie maßgeblich verantwortlich. Die zweite Schicht soll als eine Zwischenschicht auf Basis eines reaktiven High-Solids-Polyurethan(PUR)-Systems ausgebildet werden, bestehend aus 1000 g Polyetherpolyol, 400 g Diphenylmethandiisocyanat (MDI) und 10 g Nickelacetylacetonat (10-%ig in Polyoxypropylenglykol).

Diese Folie läßt sich wie folgt herstellen:

Ein genarbter Hilfsträger wird mittels Rakel zuerst mit der Masse des gelösten Polyurethans und dann mit einem weiteren Rakel mit dem reaktiven High-Solids-PUR-System beschichtet. Diese Massen werden in einem Durchlaufofen aufsteigend bis zu 165°C erwärmt und vernetzt.

Auf die ausgehärtete PUR-Schicht wird dann ein Klebstoff (2K-PUR-System) entweder inline oder in einem separaten Prozessschritt aufgebracht und eine konventionell hergestellten ABS-Folie darauf laminiert.

### Beispiel 2:

Es wird eine kompakte aliphatische Polyurethandeckschicht aus der folgenden Rezeptur erzeugt:
30 g Poly(oxypropylen)diol, Molekulargewicht 4000,
70 g Poly(oxypropylen)diol, Molekulargewicht 6000,
150 g Poly(oxypropylen)triol, Molekulargewicht 12000,
68 g IPDI (NCO-Gehalt ca. 13%) und
5 g Ni-acetylacetonat (10%-ig).

Nach Mischen der Komponenten wird die Rezeptur im Umkehrverfahren über Streichanlagen auf einen Hilfsträger gestrichen und bei T=155°C ausgehärtet.

### Beispiele 3-6:

Die Deck- bzw. Dekorschichten aus den Beispielen 1 und 2 werden jeweils auf eine der Trägerschichten der folgenden Rezepturen aufgebracht:
- Trägerschicht auf Basis PVC/ABS:
   20-50 Teile Suspensions-PVC,
   10-30 Teile Acrylnitril-Butadien-Styrol (MFI < 5 g/10 min),
   0-10 Teile Styrol-Acrylnitril-Copolymerisat (MFI 15-25 g/10 min),
   10-30 Teile Copolymeres (PE, Vinylacetat) (MFI 25-35 g/10 min),
   2-10 Teile Weichmacher,
   3-10 Teile Pigmente,
   1-3 Teile Verarbeitungshilfsmittel und
   1-3 Teile UV- und Thermostabilisatoren.
- Trägerschicht auf Basis ASA:
   60-90 Teile Acrylnitril-Styrol-Acrylat,
   3-10 Teile Acrylnitril-Butadien-Styrol (MFI < 5 g/10 min),
   2-10 Teile Weichmacher,
   3-10 Teile Pigmente,
   1-3 Teile Verarbeitungshilfsmittel und
   1-3 Teile UV- und Thermostabilisatoren.

Bei den erhaltenen Verbundfolien wurden hervorragende physikalisch/mechanische Eigenschaften erhalten: So wurden eine hohe Abriebfestigkeit, eine hohe Lichtbeständigkeit, eine ausgezeichnete Lösemittelbeständigkeit sowie eine sehr hohe thermische Alterungsbeständigkeit festgestellt.

## Patentansprüche

1. Druck- und vakuumverformbare, genarbte Verbundfolie für Verkleidungen von Fahrzeuginnenräumen mit mindestens einer Trägerschicht, einer ein- oder mehrlagigen Schicht aus einem vemetzten, elastischen Polyurethan sowie gegebenenfalls einer dazwischen angeordneten Haftvermittlerschicht, einer Primerschicht sowie weiteren üblichen Schichten, **dadurch gekennzeichnet, dass** die Trägerschicht kompakt ist und eine Dicke von 0,4 bis 1,4 mm, eine Bruchdehnung (nach DIN EN ISO 527 Teil 39) von 100 bis 300 sowie eine Shore-D-Härte von mindestens 20 aufweist, und dass die Schicht aus vernetztem, elastischem Polyurethan eine Shore-D-Härte von kleiner als 50, insbesondere kleiner als 48, aufweist.

2. Verbundfolie nach Anspruch 1, **dadurch gekennzeichnet, dass** die Shore-D-Härte der Trägerschicht 30 bis 60 beträgt.

3. Verbundfolie nach mindestens einem der vorhergehenden Ansprüche, **dadurch gekennzeichnet, dass** die Trägerschicht einen Thermoplast in Form eines Acrylnitril-Butadien-Styrol-Copolymerisats (ABS), eines Acrylnitril-Styrol-Acrylester-Copolymerisats (ASA), einer Polyvinylchlorid(PVC)/ABS-Blend, eines thermoplastischen Olefins (TPO), einer ABS/ASA-Blend, eines Polyesters, wie Polyethylentherephthalates, eines thermoplastischen Polyurethans sowie Mischungen derselben enthält.

4. Verbundfolie nach mindestens einem der vorhergehenden Ansprüche, **dadurch gekennzeichnet, dass** die Schicht aus Polyurethan aus einem löslichen Polyurethan hergestellt worden ist.

5. Verbundfolie nach Anspruch 4, **dadurch gekennzeichnet, dass** zwischen der Trägerschicht und der Schicht aus einem löslichen Polyurethan eine weitere Schicht aus einem vernetzten Polyurethan anhand eines reaktiven High-Solids-Polyurethan(PUR)-Systems ausgebildet worden ist.

6. Verbundfolie nach Anspruch 5, **dadurch gekennzeichnet, dass** zur Ausbildung der vernetzten Polyurethan-Schicht ein reaktives High-Solids-Polyurethan(PUR)-System unter Einsatz von etwa 100 Gew.-Teilen Polyetherpolyol, etwa 400 Gew.-Teilen Methylendiisocyanat und etwa 10 Gew.-Teilen Katalysator, insbesondere Nickelacetylacetonat (10%ig in Polyoxypropylenglykol) eingesetzt worden ist.

7. Verbundfolie nach mindestens einem der vorhergehenden Ansprüche, **dadurch gekennzeichnet, dass** eine kompakt ausgebildete Polyurethan-Schicht in Form einer Deckschicht eine Stärke von 0,02 bis 0,2 mm hat.

8. Verbundfolie nach mindestens einem der vorhergehenden Ansprüche, **dadurch gekennzeichnet, dass** eine weitere Polyurethanschicht als Schaumschicht mit einer Stärke von 0,2 bis 0,6 mm vorliegt.

9. Verfahren zur Herstellung einer Verbundfolie nach mindestens einem der vorhergehenden Ansprüche 1 bis 8, **dadurch gekennzeichnet, dass**
a) eine oder mehrere Polyurethanschichten auf einen dehäsiv ausgerüsteten genarbten Hilfsträger, der das Negativ einer gewünschten Prägung aufweist, mittels eines Rakels in Form einer Lösung eines thermoplastischen Polyurethans aufgetragen, getrocknet und dann mit einem Rakel eine zur Bildung eines Polyurethans fähige Streichmasse der nachfolgenden Zusammensetzung aufgebracht wird, die
I) ein Polyol HO-R¹-OH mit primären und/oder sekundären endständigen Hydroxyfunktionalitäten,
II) ein Diisocyanat OCN-R²-NCO und/oder ein Diisocyanat-Präpolymer OCN-R²-NH-CO-O-R¹-O-CO-NH-R²-NCO, wobei R¹ und R² unabhängig voneinander für einen organischen Rest stehen, der aliphatische, cycloaliphatische, aromatische und/oder heterocyclische Gruppen umfasst, und
III) einen Katalysator enthält,
b) die thermisch zu einem vernetzten Polyurethanelastomer ausgehärtet wird,
c) eine Haftvermittlerschicht ausgebildet und darauf eine kompakte Trägerschicht aufgebracht wird und
d) die Verbundfolie von dem dehäsiv ausgerüsteten Hilfsträger, der das Negativ der gewünschten Prägung aufweist, abgezogen wird.

10. Verfahren nach Anspruch 9, **dadurch gekennzeichnet, dass** als Katalysator ein Metallacetylacetonat eingesetzt wird.

11. Verfahren nach Anspruch 10, **dadurch gekennzeichnet, dass** als Metallacetylacetonat Nickelacetylacetonat eingesetzt wird.

12. Verfahren nach mindestens einem der Ansprüche 9 bis 11, **dadurch gekennzeichnet, dass** eine zur Bildung eines Polyurethans fähige reaktive Streichmasse der Zusammensetzung (A) eingesetzt wird, die beim Ausstreichvorgang eine Viskosität von 1 Pa.s bis 20 Pa.s aufweist.

13. Verfahren nach mindestens einem der Ansprüche 9 bis 12, **dadurch gekennzeichnet, dass** eine zur Bildung eines Polyurethans fähige reaktive Streichmasse der Zusammensetzung (A) eingesetzt wird, die ein strukturviskoses Verhalten zeigt.

14. Verfahren nach mindestens einem der vorhergehenden Ansprüche 9 bis 13, **dadurch gekennzeichnet, dass** der thermische Aushärtungsschritt über einen Zeitraum von 0,1 bis 4 Minuten bei 100°C bis 180°C durchgeführt wird.

15. Verfahren nach Anspruch 14, **dadurch gekennzeichnet, dass** der thermische Aushärtungsschritt über einen Zeitraum von 90 bis 150 s bei 140 bis 170°C, insbesondere bei einer Temperatur aufsteigend bis zu 165°C, durchgeführt wird.

16. Verwendung der Verbundfolie nach mindestens einem der Ansprüche 1 bis 8 zur Verkleidung von Fahrzeuginnenräumen, gegebenenfalls unter zusätzlichem Hinterschäumen mit einem Polyurethanschaum.

## Claims

1. Pressure- and vacuum-formable, grained composite foil for trim of vehicle interiors with at least one backing layer, a layer composed of one or more sublayers composed of a crosslinked, elastic polyurethane, and also, if appropriate, an adhesion-promoter layer arranged between these, a primer layer, and also other conventional layers, **characterized in that** the backing layer is compact and its thickness is from 0.4 to 1.4 mm, its tensile strain break (DIN EN ISO 527 Part 39) is from 100 to 300, and its Shore D hardness is at least 20, and **in that** the Shore D hardness of the layer composed of crosslinked, elastic polyurethane is smaller than 50, in particular smaller than 48.

2. Composite foil according to Claim 1, **characterized in that** the Shore D hardness of the backing layer is from 30 to 60.

3. Composite foil according to any of the preceding claims, **characterized in that** the backing layer comprises a thermoplastic in the form of an acrylonitrile-butadiene-styrene copolymer (ABS), of an acrylonitrile-styrene-acrylate copolymer (ASA), of a polyvinyl chloride (PVC)/ABS blend, of a thermoplastic olefin (TPO), of an ABS/ASA blend, of a polyester, such as polyethylene terephthalate, of a thermoplastic polyurethane, or else of a mixture of the same.

4. Composite foil according to at least one of the preceding claims, **characterized in that** the layer composed of polyurethane has been produced from a soluble polyurethane.

5. Composite foil according to Claim 4, **characterized in that**, between the backing layer and the layer composed of a soluble polyurethane, another layer has been formed composed of a crosslinked polyurethane using a reactive high-solids-polyurethane (PU) system.

6. Composite foil according to Claim 5, **characterized in that**, to form the crosslinked polyurethane layer, a reactive high-solids-polyurethane (PU) system has been used with use of about 100 parts by weight of polyether polyol, about 400 parts by weight of methylene diisocyanate and about 10 parts by weight of catalyst, in particular nickel acetylacetonate (10% strength in polyoxypropylene glycol).

7. Composite foil according to at least one of the preceding claims, **characterized in that** the thickness of a compact polyurethane layer in the form of an outer layer is from 0.02 to 0.2 mm.

8. Composite foil according to at least one of the preceding claims, **characterized in that** another polyurethane layer whose thickness is from 0.02 to 0.6 mm is present as foam layer.

9. Process for production of a composite foil according to at least one of the preceding Claims 1 to 8, **characterized in that**
a) by means of a doctor, one or more polyurethane layers is/are applied in the form of a solution of a thermoplastic polyurethane to a grained auxiliary backing which has been release-treated and which has the negative of a desired embossment, and is/are dried, and then a doctor is used to apply a coating composition whose constitution is as follows and which is capable of forming a polyurethane, and which comprises
I) a polyol HO-R¹-OH having primary and/or secondary terminal hydroxy functions,
II) a diisocyanate OCN-R²-NCO and/or a diisocyanate prepolymer OCN-R²-NH-CO-O-R¹-O-CO-NH-R²-NCO, where R¹ and R², independently of one another, are an organic radical which encompasses aliphatic, cycloaliphatic, aromatic and/or heterocycle groups, and
(III) a catalyst,
b) which is thermally hardened to give a crosslinked polyurethane elastomer,
c) an adhesion-promoter layer is formed and a compact backing layer is applied thereto and
d) the composite foil is peeled from the auxiliary backing which has been release-treated and which has the negative of the desired embossment.

10. Process according to Claim 9, **characterized in that** a metal acetylacetonate is used as catalyst.

11. Process according to Claim 10, **characterized in that** nickel acetylacetonate is used as metal acetylacetonate.

12. Process according to at least one of Claims 9 to 11, **characterized in that** a reactive coating composition which is capable of forming a polyurethane and has the constitution (A) is used, its viscosity during the spreading procedure being from 1 Pa.s to 20 Pa.s.

13. Process according to at least one of Claims 9 to 12, **characterized in that** a reactive coating composition which is capable of forming a polyurethane and has the constitution (A) is used, and exhibits pseudoplastic behaviour.

14. Process according to at least one of the preceding Claims 9 to 13, **characterized in that** the thermal hardening step is carried out over a period of from 0.1 to 4 minutes and from 100°C to 180°C.

15. Process according to Claim 14, **characterized in that** the thermal hardening step takes place over a period of from 90 to 150s, at from 140 to 170°C, in particular at a temperature rising as far as 165°C.

16. Use of the composite foil according to at least one of Claims 1 to 8 for trim in vehicle interiors, if appropriate with additional reverse foaming with a polyurethane foam.

## Revendications

1. Feuille composite grainée, capable de déformation sous l'action de la pression et du vide, pour habillements d'intérieurs de véhicules automobiles, ayant au moins une couche support, une couche à une ou plusieurs épaisseurs, faite d'un polyuréthanne élastique, réticulé ainsi que, le cas échéant, une couche de promoteur de l'adhésion disposée entres ces dernières, une couche d'apprêt ainsi que des couches supplémentaires usuelles, **caractérisée en ce que** la couche support est compacte et présente une épaisseur de 0,4 à 1,4 mm, un allongement à la rupture (conformément à la norme DIN EN ISO 527, partie 39) de 100 à 300 ainsi qu'une dureté Shore-D d'au moins 20 et **en ce que** la couche faite de polyuréthanne élastique réticulé présente une dureté Shore-D inférieure à 50, en particulier inférieure à 48.

2. Feuille composite selon la revendication 1, **caractérisée en ce que** la dureté Shore-D de la couche support est de 30 à 60.

3. Feuille composite selon au moins une des revendications précédentes, **caractérisée en ce que** la couche support contient un thermoplaste sous la forme d'un copolymère acrylonitrile-butadiène-styrène (ABS), d'un copolymère acrylonitrile-styrène-ester acrylique (ASA), d'un mélange chlorure de polyvinyle(PVC)/ABS, d'une oléfine thermoplastique (TPO), d'un mélange ABS/ASA, d'un polyester, comme les téréphtalates de polyéthylène, d'un polyuréthanne thermoplastique ainsi que de mélanges de ces derniers.

4. Feuille composite selon au moins une des revendications précédentes, **caractérisée en ce que** la couche en polyuréthanne a été préparée à partir d'un polyuréthanne soluble.

5. Feuille composite selon la revendication 4, **caractérisée en ce qu'**entre la couche support et la couche faite en polyuréthanne soluble est formée une couche supplémentaire faite d'un polyuréthanne réticulé sur la base d'un système réactif High-Solids-polyuréthanne (PUR).

6. Feuille composite selon la revendication 5, **caractérisée en ce que** l'on a utilisé, en vue de la formation de la couche de polyuréthanne réticulé, un système réactif High-Solids-polyuréthanne (PUR) par utilisation d'environ 100 parties en poids d'un polyétherpolyol, d'environ 400 parties en poids de diisocyanate de méthylène et d'environ 10 parties en poids de catalyseur, en particulier d'acétylacétonate de nickel (à raison de 10% dans le polyoxypropylèneglycol).

7. Feuille composite selon au moins une des revendications précédentes, **caractérisée en ce qu'**une couche de polyuréthanne formée de manière compacte sous la forme d'une couche de finition a une épaisseur de 0,02 à 0,2 mm.

8. Feuille composite selon au moins une des revendications précédentes, **caractérisée en ce qu'**une couche de polyuréthanne supplémentaire en tant que couche alvéolaire est présente avec une épaisseur de 0,2 à 0,6 mm.

9. Procédé en vue de la fabrication d'une feuille composite selon au moins une des revendications précédentes 1 à 8, **caractérisé**
a) en ce qu'une ou plusieurs couches de polyuréthanne est ou sont appliquées sur un subjectile auxiliaire grainé, traité d'une manière anti-adhésive, qui présente le négatif d'une empreinte souhaitée, à l'aide d'un racloir sous la forme d'une solution d'un polyuréthanne thermoplastique, est ou sont séchées, et en ce que l'on applique alors, à l'aide d'un racloir, une pâte à enduire, capable de former un polyuréthanne, de la composition suivante, qui contient
I) un polyol HO-R¹-OH ayant des fonctionnalités hydroxy primaires et/ou secondaires terminales,
II) un diisocyanate OCN-R²-NCO et/ou un prépolymère de diisocyanate OCN-R²-NH-CO-O-R¹-O-CO-NH-R²-NCO, R¹ et R² désignant, indépendamment l'un de l'autre, un radical organique, qui comprend des groupements aliphatiques, cycloaliphatiques, aromatiques et/ou hétérocycliques, et
III) un catalyseur,
b) qui est durcie par voie thermique en un élastomère de polyuréthanne réticulé,
c) en ce que l'on forme une couche de promoteur de l'adhésion et que l'on y applique pardessus une couche support compacte et
d) en ce que l'on retire la feuille composite du support auxiliaire traité d'une manière anti-adhésive, qui présente le négatif de l'empreinte souhaitée.

10. Procédé selon la revendication 9, **caractérisé en ce que** l'on utilise, en tant que catalyseur, un acétylacétonate de métal.

11. Procédé selon la revendication 10, **caractérisé en ce que** l'on utilise, en tant qu'acétylacétonate de métal, l'acétylacétonate de nickel.

12. Procédé selon au moins une des revendications 9 à 11, **caractérisé en ce que** l'on utilise une pâte à enduire réactive, capable de former un polyuréthanne, de la composition (A), qui présente lors de la procédure d'application, une viscosité de 1 Pa.s à 20 Pa.s.

13. Procédé selon au moins une des revendications 9 à 12, **caractérisé en ce que** l'on utilise une pâte à enduire réactive, capable de former un polyuréthanne, de la composition (A), qui manifeste un comportement à viscosité de structure.

14. Procédé selon au moins une des revendications 9 à 13, **caractérisé en ce que** l'étape de durcissement thermique est effectuée en l'espace d'une période de temps de 0,1 à 4 minutes à la température de 100°C à 180°C.

15. Procédé selon la revendication 14, **caractérisé en ce que** l'étape de durcissement thermique est effectuée en l'espace d'une période de temps de 90 à 150 secondes à la température de 140 à 170°C, en particulier à une température montant jusqu'à 165°C.

16. Utilisation de la feuille composite selon au moins une des revendications 1 à 8, en vue de l'habillement des intérieurs de véhicules automobiles, le cas échéant, avec un moussage arrière supplémentaire fait à l'aide d'une mousse de polyuréthanne.
